# FASCICULE DE BREVET EUROPEEN

(11) **EP 3 875 437 B1**
(45) Date de publication et mention de la délivrance du brevet: **12.06.2024**
(21) Numéro de dépôt: 21159871.9
(22) Date de dépôt: 01.03.2021
(51) Int. Cl.: C03C 8/04, C03C 8/06, C03C 27/02, H01R 13/52, C03C 3/12, C03C 3/14, C03C 3/23

(54) **CONNECTEUR CIRCULAIRE HERMETIQUE**
HERMETISCHER RUNDSTECKVERBINDER
SEALED CIRCULAR CONNECTOR

(30) Priorité: 03.03.2020 FR 2002139
(43) Date de publication de la demande: 08.09.2021
(73) Titulaire: AXON CABLE, 51210 Montmirail (FR)
(72) Inventeur: YU, Ning, 51210 MONTMIRAIL (FR); NOIZET, Guillaume P, 51210 MONTMIRAIL (FR)
(74) Mandataire: Cabinet Beau de Loménie

(56) Documents cités:
- EP-A1- 3 594 191
- DE-A1-102013 006 463
- FR-A1- 3 036 396
- US-A- 4 420 210
- US-A- 5 298 683

## Description

### Domaine Technique

La présente invention concerne des connecteurs circulaires hermétiques et leur procédé de fabrication.

### Technique antérieure

Les connecteurs électriques circulaires haut de gamme sont régis par de nombreuses normes :
- MIL-DTL-26482 (séries I, II) de février 2017 et EN 3646 d'octobre 2006 pour les connecteurs principalement utilisés dans le domaine aéronautique.
- MIL-DTL-38999 (séries I, II, III et IV) de février 2015 et EN3645 de décembre 2011 pour les connecteurs de l'électronique de défense.
- MIL-DTL-83723 série III de novembre 2009 et EN 2997 de décembre 2011 pour les connecteurs de moteur d'avion.
- MIL-DTL-5015 de mai 2000 pour les connecteurs de puissance.
- EIA-364-32 de mars 2000 pour les essais de choc thermique.

Les connecteurs définis dans ces normes sont constitués en principe de 3 types de composants : contacts, insert isolant et boitier. Les contacts, dont le nombre est de 2 à 187, sont en général en alliage cuivreux. L'insert isolant faisant office d'isolation électrique est en thermoplastique. Le boîtier dans lequel sont assemblés les contacts et l'insert isolant selon un arrangement défini par une des normes (Mil-STD-1560 de février 2015, Mil-STD-1554 de novembre 2015, Mil-STD-1651 de novembre 2016, Mil-STD-1669 d'octobre 2016) est en acier ou acier inoxydable, ou en alliage d'aluminium, ou encore en composite plastique.

Parmi les connecteurs définis par les normes précitées, certains fabricants proposent sur le marché une version hermétique en utilisant principalement 2 types de technologies : scellement polymère-métal et scellement verre-métal.

Dans la première technologie le niveau d'herméticité (mesure de fuite de l'hélium) obtenue est faible, se limitant typiquement à 10⁻⁷ mbar.l.s⁻¹. La capacité de maintenir l'herméticité dans les tests de choc thermique est également faible, principalement dû à l'écart important en dilatation thermique entre polymère et métal. Les brevets US3522575, US4113673 et US7249971 divulguent ce type de connecteurs hermétiques.

Dans la seconde technologie l'herméticité mesurée par la même méthode peut atteindre à 10⁻¹¹ mbar.l.s⁻¹. On peut qualifier cette technologie de « Kovar » dans laquelle on utilise une famille d'alliages fer-nickel portant le même nom de marque. Les alliages Kovar présentent un coefficient de dilatation thermique qui est proche de celui du verre. On exploite cette « compatibilité » pour réaliser le scellement hermétique verre-métal.

Plus précisément, dans le cas des connecteurs hermétiques circulaires, les contacts sont bien souvent en alliage Kovar, l'insert en verre du type borosilicate et le boîtier soit en alliage Kovar soit en acier soit encore en acier inoxydable. Ce type de connecteurs, ainsi que sa mise en oeuvre, peuvent s'illustrer par les brevets EP0229549 et US4420210.

La norme MIL-STD-883 d'avril 2016 est l'une des normes explicitant la méthode de mesure du taux de fuite pour les composants électroniques. Selon les conditions A4, la pièce est fixée de manière hermétique (utilisation d'un joint d'étanchéité et d'un serrage adapté) sur une chambre sous dépression. Il est avantageux d'avoir la pression la plus faible possible dans cette chambre pour avoir la meilleure sensibilité. En effet, plus la pression est faible, moins il y a de molécules de gaz dans la chambre et donc d'hélium résiduel, ce qui réduit le bruit de fond. La norme impose une pression inférieure à 0,13mbar (0,1torr). Cette chambre est reliée à un spectromètre de masse calibré pour atteindre le taux de fuite à l'hélium attendu. La calibration doit être faite à chaque période d'utilisation, grâce à une fuite calibrée de type diffusion. L'étanchéité du montage doit être vérifiée avec une plaque métallique plane. Ceci est réalisé en aspergeant la plaque d'hélium à l'aide d'un pistolet. Si le détecteur ne détecte pas d'hélium lors de cette vérification, le montage est correct et les pièces peuvent être testées de la même manière, en les aspergeant d'hélium.

Un bon niveau d'herméticité de connecteur (par exemple 1×10⁻¹¹ mbar·l/s) dépend principalement du scellement réalisé aux interfaces des composants métalliques conducteurs et de ceux en matériaux minéraux isolants.

La version hermétique des connecteurs définie dans les normes précitées est bien basée sur les données et le savoir-faire de la seconde technologie de scellement, dite Kovar.

La présente invention concerne ainsi les connecteurs circulaires hermétiques réalisés par scellement verre- métal.

Dans la mesure où le matériau Kovar, choisi par contrainte, est moins performant en termes de conduction électrique, de résistance à la corrosion, et de masse, les connecteurs hermétiques obtenus présentent de nombreuses insuffisances par rapport aux exigences des normes.

Les normes précitées englobent un nombre considérables (des centaines) de connecteurs en fonction du nombre et de la taille des contacts, ainsi que des arrangements de contacts. Cependant, la norme Mil-C-39029 de mai 1988 ne stipule qu'une vingtaine de contacts caractérisés par leur diamètre. Plus particulièrement, pour les connecteurs hermétiques, ce nombre est réduit à 6, à savoir les tailles 23, 22, 20, 16, 12 et 8.

Une première insuffisance des connecteurs hermétiques utilisant la technologie Kovar par rapport aux normes se trouve au niveau des contacts en termes d'intensité électrique admise. Du fait que l'alliage Kovar est nettement moins conducteur que le cuivre et les alliages cuivreux, celle-ci par contact doit être abaissée par rapport aux normes, voir pour les détails le tableau 1 ci-dessous.

**Tableau 1**

| **Taille d'engagement de Contact** | **Diamètre d'engagement de contact (mm)** | **Intensité maxi admise en standard*** | **Intensité maxi admise en connecteurs hermétiques en Kovar**** |
|---|---|---|---|
| 23 | 0,6858 | 5 A | 3 A |
| 22 | 0,762 | 5 A | 3 A |
| 20 | 1,016 | 7,5 A | 5 A |
| 16 | 1,5875 | 13 A | 10 A |
| 12 | 2,3876 | 23 A | 17 A |
| 8 | 3,6068 | 46 A | 40 A |

| | | | |
|---|---|---|---|
| * Selon les normes Mil-C-39029 de mai 1988 et SAE-AS39029 de janvier 2017. ** Selon les normes Mil-DTL-26482 de février 2017, Mil-DTL-38999 de février 2015 et Mil-DTL-83723 de novembre 2009. | | | |

Une autre insuffisance des connecteurs hermétiques en Kovar est relative à la densité massique (en g/cm³) de Kovar qui est typiquement de 8,36, alors que l'on souhaite dans bien des applications l'utilisation des alliages d'aluminium qui ont une densité massique autour de 2,70.

Encore une autre insuffisance des connecteurs hermétiques en Kovar concerne au niveau du boîtier sa médiocre tenue à la corrosion. Pour remédier au problème, la surface du boîtier est généralement revêtue d'une sous-couche de nickel et d'une couche d'or, ces traitements de surface ayant pour but de protéger le Kovar contre les corrosions de tout type d'une part et d'autre part de rendre possible le brasage tendre lors du montage de ces connecteurs sur module électronique.

Encore un autre inconvénient lié au Kovar se trouve dans le procédé de scellement verre-métal. Le verre borosilicate présentant une température de transition vitreuse très élevée fait que le scellement s'effectue entre 850°C et 950°C. Le passage dans une telle zone de température, équivalent à un fort impact thermique, n'est évidemment pas souhaitable pour l'ensemble des composants métalliques des connecteurs (contacts comme boîtier). C'est la raison pour laquelle le scellement verre-métal ne se réalise que sur le connecteur qui ne contient pas de contact comportant le mécanisme de rétention. Dans le cas de connecteurs circulaires régis par les normes précitées, l'herméticité s'obtient toujours sur le connecteur contenant des contacts mâles afin d'éviter d'altérer l'élasticité (ou l'effet de ressort) indispensable dans le mécanisme de rétention qui est physiquement réalisée dans le contact femelle. Il s'agit ici du phénomène de fluage bien connu en métallurgie.

Dans la finition des connecteurs hermétiques en Kovar, une autre contrainte dans le procédé de fabrication se rencontre au niveau du traitement de surface. En fait, aucun revêtement métallique réalisé sur contacts par voie conventionnelle, électrolytique ou chimique, ne résiste à l'impact thermique du scellement à 850°C - 950°C pendant un laps de temps allant de 1 à 2 heures. Ce qui contraint à ce qu'on ne réalise les traitements de surface des contacts qu'après le scellement, et ce nécessairement de façon sélective en utilisant des outillages spécifiques.

Ces insuffisances des connecteurs hermétiques dues à l'utilisation de Kovar, incitent à des efforts en recherche et développement afin de trouver de nouvelles technologies en scellement verre-métal.

Le brevet FR 3 036 396 et la demande de brevet française FR 3 083 794 divulguent une technologie de scellement verre-métal à température relativement basse (400°C-500°C), ainsi que les connecteurs rectangulaires hermétiques obtenus suivant cette technologie. Ces connecteurs sont du type micro-D composés de contacts en alliage cuivreux et de boîtiers soit en acier inoxydable soit en alliage d'aluminium conformément à la norme Mil-DTL-83513 d'octobre 2008. Cette norme ne définit en effet pas de connecteur circulaire mais des connecteurs rectangulaires. Dans la mise en oeuvre de ces connecteurs, on utilise un isolant en verre sous forme tubulaire (appelé couramment perle de verre ou préforme de verre) par contact. Le scellement verre-métal, après que l'ensemble des contacts, des perles de verre et du boîtier soient assemblés à température ambiante, s'effectue à une température comprise entre 350°C et 500°C pendant un laps de temps compris entre 30 minutes et 60 minutes. Ce temps de scellement verre-métal est trop important pour la fabrication de connecteurs circulaires, en particulier contenant des contacts femelles, car ces derniers peuvent perdre leurs caractéristiques mécaniques à cause de l'impact thermique lors du scellement, mais aussi des contacts mâles qui nécessitent une certaine élasticité pour conserver une capacité de rétention mécanique après scellement. En outre cette technique de fabrication implique des consommables (préformes de verre) complexes de mise en oeuvre et onéreux.

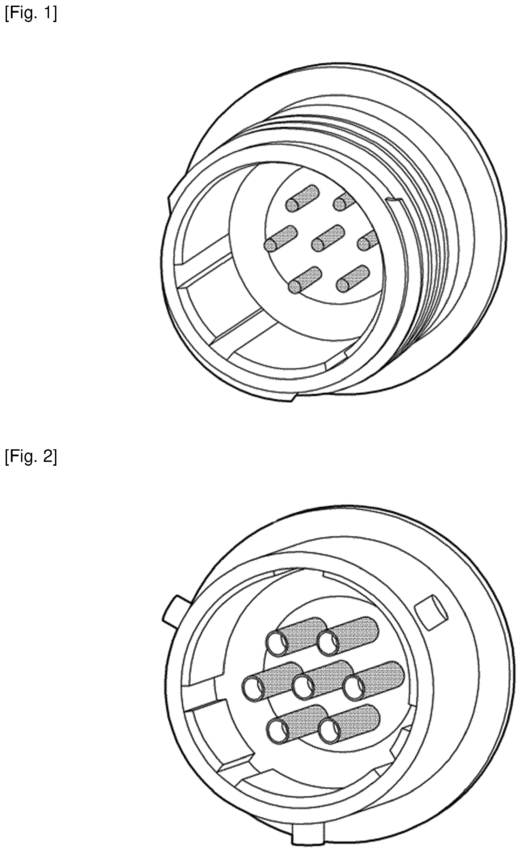

Les figures 2A et 2B de ces deux documents représentent une vue schématique locale du scellement en compression d'un contact dans une cavité cylindrique d'un boitier par l'intermédiaire d'une préforme cylindrique. Le contact, la cavité et la préforme sont tous trois de forme cylindrique. Ces formes liées au procédé employé permettent de créer lors du scellement une force de compression concentrique et homogène. La forme du boitier extérieur peut quant à elle être quelconque. La figure 2B n'est donc que le fruit du hasard et d'une facilité de dessin. Les connecteurs circulaires ne sont donc en rien divulgués dans ces documents.

### Exposé de l'invention

Les inventeurs se sont aperçus de façon surprenante qu'il était possible de fabriquer des connecteurs circulaires hermétiques à l'aide du matériau de scellement décrit dans la demande de brevet FR 3 083 794 grâce à un nouveau procédé dans lequel le matériau de scellement est chauffé jusqu'à sa fluidification avant son ajout dans le connecteur circulaire, ce qui limite le temps de scellement à haute température entre le contact et le matériau de scellement et donc l'impact thermique sur les contacts de type femelle qui provoque une perte d'élasticité du mécanisme de rétention du contact femelle par relaxation de contrainte lié au fluage.

Le procédé selon l'invention permet le scellement sur l'ensemble d'un connecteur circulaire (contacts-isolant-boîtier) à une température modérée et en un temps court, conduisant donc à un procédé de mise en oeuvre rapide et facilement automatisable.

Les connecteurs obtenus présentent un niveau d'herméticité inférieur ou égal à 10⁻¹¹ mbar.l/s mesuré suivant la norme Mil-STD-883 d'avril 2016.

Les connecteurs obtenus conservent ce bon niveau d'herméticité après le test de chocs thermiques répétitifs défini dans une des normes Mil-DTL-26482 de février 2017, Mil-DTL-38999 de février 2015 et Mil-DTL-83723 de novembre 2009. Ce test, dont la méthodologie est variable en fonction des normes, est considéré comme le plus pertinent et appliqué de façon systématique pour la version hermétique.

Les connecteurs obtenus présentent également une intensité électrique admise par contact requise par la norme Mil-C-39029 de mai 1988.

Les connecteurs obtenus sont plus légers que ceux en Kovar, grâce notamment à l'utilisation de boîtiers en alliage d'aluminium.

La présente invention concerne donc un connecteur circulaire hermétique comprenant au moins un contact dans un boitier et un matériau de scellement verre-métal entre le au moins un contact et le boîtier caractérisé en ce que
- le au moins un contact est en cuivre ou en alliage de cuivre, éventuellement nickelé ou nickelé-doré,
- le boîtier est en métal ou alliage, ledit métal ou alliage ayant un coefficient de dilatation thermique supérieur à 16ppm/°C, ledit métal ou alliage pouvant avoir subi un traitement de surface,
- le matériau de scellement est un verre à base d'oxyde de tellure ayant la composition constituée par, en pourcentage molaire :
   - de 50 à 80 % de TeO₂, avantageusement de 60 à 70 % ;
   - de 8 à 40 % de ZnO, avantageusement de 15 à 35 % ;
   - de 2 à 25% de TiO₂, avantageusement de 3 à 10 %
   - de 0 à 20 % d'un oxyde αₓO_{y}, avantageusement de 1 à 6 %, α étant un élément choisi dans le groupe constitué par Ba, Ce, Er, Sb, Y, La et B, x étant un nombre entier égal à 1 ou 2 et y un nombre entier égal à 1, 2 ou 3;
   - éventuellement du ZnF₂ en une teneur de 2 à 10%, avantageusement de 3 à 8 %
   - et les impuretés inévitables,

   à la condition que ZnF₂ soit présent lorsque αₓO_{y} est BaO,
   ladite composition étant essentiellement exempte, en particulier totalement exempte, d'oxyde de plomb, d'oxyde de sodium, d'oxyde de potassium et d'oxyde de vanadiurr caractérisé en ce qu'il présente un taux de fuite à l'hélium inférieur ou égal à 10⁻¹¹ mbar.l/s.

Avantageusement, la composition du verre à base d'oxyde de tellure selon l'invention est exempte de Bi₂O₃.

Plus avantageusement, la composition du verre à base d'oxyde de tellure selon l'invention est exempte d'Al₂O₃, de F et/ou de PbF₂.

En général les impuretés inévitables de la composition du verre à base d'oxyde de tellure selon l'invention peuvent être choisies parmi le plomb (Pb), le fer (Fe), le cuivre (Cu), l'arsenic (As), l'antimoine (Sb), le calcium (Ca), le carbonate (CO₃), le magnésium (Mg), le potassium (K), le sodium (Na), le phosphore (P), le chlore (Cl), le silicium (Si), le soufre (S) et leurs mélanges.

La teneur totale en impuretés inévitables est en générale inférieure ou égale à 0,1105% (1105 ppm).

Au sens de la présente invention, on entend par « matériau de scellement verre-métal » tout matériau à base de verre qui permet la liaison entre deux métaux ou alliages métalliques. Cette liaison implique dans le cas des connecteurs une liaison hermétique qui permet le passage d'une information électrique. L'isolation électrique est donc également sous-entendue. Le matériau de scellement devient donc l'insert isolant du connecteur circulaire hermétique.

Au sens de la présente invention, on entend par « verre à base d'oxyde de tellure » tout verre dont le composant principal de la composition est de l'oxyde de tellure (TeO₂), avantageusement dont le TeO₂ est présent en une teneur supérieure aux autres composants, encore plus avantageusement en une teneur d'au moins 50% en pourcentage molaire, encore plus avantageusement d'au moins 60% en pourcentage molaire.

Au sens de la présente invention on entend par « cuivre ou alliage de cuivre nickelé», tout cuivre ou alliage de cuivre ayant subi un traitement de surface de façon à déposer une fine couche de nickel à sa surface, en particulier par électrolyse ou par un procédé de dépôt chimique. Cette couche de nickel comprend en général également du phosphore, avantageusement en une teneur en pourcentage molaire comprise entre 5 et 12%, en particulier pour rendre cette couche amagnétique, une teneur en pourcentage molaire comprise entre 10,5 et 12%. L'épaisseur de cette couche est en général comprise entre 1 et 20 µm, en particulier entre 1 et 15 µm avantageusement entre 1 et 7 µm, plus particulièrement entre 1 et 2 µm.

Cette couche peut être complétée par une couche d'or. On parle alors de « cuivre ou alliage de cuivre nickelé-doré » selon la présente invention. Dans ce cas, chaque couche a avantageusement une épaisseur comprise entre 1 et 10 µm, en particulier entre 1 et 7 µm, plus particulièrement entre 1 et 2 µm.

Dans un mode de réalisation de la présente invention, l'alliage ou le métal ayant un coefficient de dilatation thermique supérieur à 16ppm/°C est choisi parmi :
- l'aluminium et ses alliages, avantageusement les alliages aluminium silicium, aluminium magnésium ou aluminium magnésium silicium tels que par exemple les alliages des séries 4000 (aluminium silicium), en particulier les alliages 4047 et 4032, plus particulièrement de la série 4047, les alliages des séries 5000 (aluminium magnésium), en particulier les alliages 5083 et 5754, plus particulièrement de la série 5083 et les alliages des séries 6000 (aluminium magnésium silicium), en particulier l'alliage 6061, encore plus particulièrement les alliages des séries 5000 (aluminium magnésium), de façon particulière l'alliage 5083 ;
- l'inox, en particulier le 304L et le 316L,
- le cuivre et les alliages de cuivre ayant éventuellement subi un traitement de surface, en particulier nickelé ou nickelé-doré, avantageusement un alliage cuivre béryllium, tel que l'alliage cuivre-béryllium type 33, encore appelé C17300 (1,8% Be, 0,2% Co et 0,2% minimum de Pb pour l'usinabilité) ayant éventuellement subi un traitement de surface, en particulier nickelé ou nickelé-doré.

En particulier l'alliage ou métal ayant un coefficient de dilatation thermique supérieur à 16ppm/°C est choisi dans le groupe constitué par l'aluminium, les alliages de l'aluminium et l'inox, avantageusement il s'agit d'un alliage d'aluminium, en particulier choisi dans le groupe constitué par un alliage aluminium silicium, aluminium magnésium ou aluminium magnésium silicium, plus particulièrement dans le groupe constitué par un alliage aluminium silicium et un alliage aluminium magnésium. De façon avantageuse, l'alliage ou métal ayant un coefficient de dilatation thermique supérieur à 16ppm/°C peut avoir subi un traitement de surface, en particulier être nickelé ou nickelé-doré.

En général, les coefficients de dilatation thermique sont pour:
- l'alliage cuivre béryllium de type 33 : 17,3 ppm/°C,
- les alliages d'aluminium :
   - l'alliage 5083 : 25,2ppm/°C
   - l'alliage 5754 : 24,6ppm/°C
   - l'alliage 6061 : 23,4ppm/°C
   - l'alliage 4032 : 20,2ppm/°C
   - l'alliage 4047 :19ppm/°C
   - l'Inox 304L : 17ppm/°C
   - l'Inox 316L : 16,5ppm/°C.

Le coefficient de dilatation thermique (CTE) est mesuré dans le cadre de la présente invention sur une TMA de chez TA instrument (TMA 2940), avec une rampe de 2°/min de 30 °C à 250 °C.

La composition du verre à base d'oxyde de tellure selon la présente invention comprend donc, en pourcentage molaire, de 50 à 80 % deTeO₂, avantageusement de 55 à 75%, en particulier de 60 à 70 %, plus avantageusement 65%.

La composition du verre à base d'oxyde de tellure selon la présente invention comprend en outre du ZnO. Le ZnO permet à la composition de verre d'avoir une bonne stabilité. La teneur en ZnO de la composition selon la présente invention en pourcentage molaire est donc de 8 à 40 %, avantageusement de 10 à 40%, plus avantageusement de 13 à 40%, encore plus avantageusement de 15 à 38%, particulièrement avantageusement de 15 à 35 %, en particulier de 20 à 35%, plus particulièrement de 25 à 35%, encore plus particulièrement de 26 à 31%.

La composition du verre à base d'oxyde de tellure selon la présente invention comprend en outre du TiO₂. En effet le TiO₂ semble apporter une excellente durabilité au verre. La teneur en TiO₂ de la composition selon la présente invention en pourcentage molaire est donc de 2 à 25%, avantageusement de 2 à 22%, plus avantageusement de 2 à 20%, particulièrement avantageusement de 3 à 10 %, encore plus avantageusement de 5%.

La composition du verre à base d'oxyde de tellure selon la présente invention peut comprendre de plus un oxyde αₓO_{y}, α étant un élément choisi dans le groupe constitué par Ba, Ce, Er, Sb, Y, La et B, en particulier choisi dans le groupe constitué par Ce, Sb, Y, La et B, plus particulièrement Ce, x étant un nombre entier égal à 1 ou 2 et y un nombre entier égal à 1, 2 ou 3, à la condition que ZnF₂ soit également présent dans la composition lorsque αₓO_{y} est BaO.

Cet oxyde permet d'améliorer la stabilité, la mouillabilité et/ou le coefficient de dilatation thermique CTE (Coefficient of Thermal Expansion) des verres.

La teneur en αₓO_{y} de la composition du verre à base d'oxyde de tellure selon la présente invention en pourcentage molaire, s'il est présent, est de 1 à 20 %, avantageusement de 1 à 15%, plus avantageusement de 1 à 10%, particulièrement avantageusement de 1 à 6%, encore plus avantageusement de 1 à 5%, en particulier de 2 à 15 %, plus particulièrement de 2 à 10%, en particulier de 3 à 5%.

Dans un mode de réalisation avantageux, αₓO_{y} est choisi dans le groupe constitué par Y₂O₃, CeO₂, Sb₂O₃, Er₂O₃, La₂O₃, B₂O₃ et BaO, en particulier dans le groupe constitué par CeO₂, Sb₂O₃, Y₂O₃, La₂O₃ et B₂O₃, plus particulièrement il s'agit de CeO₂.

Dans un autre mode de réalisation avantageux, la composition du verre à base d'oxyde de tellure selon la présente invention est exempte d'oxyde αₓO_{y}.

La composition selon la présente invention peut comprendre de plus du ZnF₂. Le ZnF₂ est obligatoirement présent lorsque αₓO_{y} est BaO, notamment afin d'améliorer la stabilité de la composition.

S'il est présent, la teneur en ZnF₂ de la composition selon la présente invention en pourcentage molaire est donc de 2 à 10%, avantageusement de 3 à 8 %, encore plus avantageusement de 4 à 6%, en particulier de 5%.

Dans un mode de réalisation avantageux, la composition du verre à base d'oxyde de tellure selon la présente invention a un coefficient de dilatation thermique (CTE) compris entre 11 et 22 ppm/°C, avantageusement entre 11,5 et 19 ppm/°C, plus avantageusement entre 12 et 16 ppm/°C, en particulier entre 13 et 16 ppm/°C. Dans un mode de réalisation avantageux, la composition du verre à base d'oxyde de tellure selon la présente invention a un CTE inférieur à celui du métal ou alliage de métal destiné au scellement verre-métal.

Dans un autre mode de réalisation avantageux, la composition du verre à base d'oxyde de tellure selon la présente invention a un angle de mouillage inférieur à 105°, avantageusement compris entre 10° et 98°, en particulier entre 30° et 98°, mesuré d'une manière optique, avec un appareil photo Nikon (D5100, objectif : AF-S Micro NiKKOR 40mm 1:2,8G) et le logiciel freeware ImageJ à une température comprise entre 400 et 510°C. Un bon angle de mouillage permet d'éviter la présence d'air entre le verre et le métal ou alliage métallique ce qui évite les problèmes d'herméticité.

Dans un autre mode de réalisation avantageux, la composition du verre à base d'oxyde de tellure selon la présente invention a une température de transition vitreuse (Tg) inférieure à 500°C, avantageusement comprise entre 250 et 400°C, en particulier comprise entre 300 et 380°C. Une faible température de transition vitreuse permet d'obtenir un scellement verre-métal à plus faible température, ce qui est utile pour le scellement verre-métal d'alliages d'aluminium qui ont une faible température de fusion. En effet ceci évite donc le ramollissement de ces alliages lors du procédé de scellement verre-métal. Toutefois, une température de transition vitreuse (Tg) trop faible n'est pas intéressante dans le cadre de la présente invention car il convient d'obtenir un connecteur ayant une tenue en température jusqu'à 200°C. Une Tg trop faible du verre entraîne un fluage du verre à ces températures d'utilisation qui peuvent engendrer la perte d'herméticité.

La Tg est mesurée grâce à un DSC (Differential scanning calorimetry): DSC setaram (DSC 131). La mesure est effectuée de 20 à 580 °C avec une rampe de 10°C/min. Les températures Tg et Tx sont les températures onset (de début de phénomène).

Dans un autre mode de réalisation avantageux, la composition du verre à base d'oxyde de tellure selon la présente invention a une durabilité chimique comprise entre 1×10⁻⁶ et 1×10⁻⁸ g/(cm².min) déterminée en soxhlet à 95°C dans de l'eau déminéralisée et renouvelée continuellement selon la norme ISO16797 d'avril 2004.

Des exemples de composition du verre à base d'oxyde de tellure selon la présente invention sont rassemblés dans le tableau 2 ci-dessous :

**Tableau 2**

| **verre** | **Composition en pourcentage molaire** | **Tg (°C)** | **CTE (ppm/°C)** |
|---|---|---|---|
| 1 | (TeO₂)₆₅(ZnO)₂₇(TiO₂)₅(CeO₂)₃ | 357 | 13,76 |
| 2 | (TeO₂)₆₅(ZnO)₂₅(TiO₂)₅(Sb₂O₃)₅ | 339 | 15,53 |
| 3 | (TeO₂)₆₅(ZnO)₂₉(TiO₂)₅(Y₂O₃)₁ | 361 | 14,07 |
| 4 | (TeO₂)₆₅(ZnO)₂₇(TiO₂)₅(La₂O₃)₃ | 371 | 13,46 |
| 5 | (TeO₂)₆₅(ZnO)₂₇(TiO₂)₅(B₂O₃)₃ | 354 | 14,43 |
| 6 | (TeO₂)₆₅(ZnO)₃₀(TiO₂)₅ | 346 | 13,6 |
| 7 | (TeO₂)₆₅(ZnO)₂₀(TiO₂)₅(ZnF₂)₅(BaO)₅ | 349 | 15,9 |
| 8 | (TeO₂)₆₅(ZnO)₂₉(TiO₂)₅(Er₂O₃)₁ | 359 | 13,34 |
| 9 | (TeO₂)₆₅(ZnO)₂₇(TiO₂)₅(Y₂O₃)₃ | 375 | 14,07 |

Dans un mode de réalisation avantageux le au moins un contact est en cuivre ou alliage de cuivre, avantageusement en alliage de cuivre en particulier en alliage de cuivre-béryllium, éventuellement nickelé ou nickelé-doré, encore plus avantageusement en alliage cuivre-béryllium nickelé-doré.

Le connecteur selon l'invention présente un taux de fuite à l'hélium inférieur ou égal à 10⁻¹¹ mbar.l/s mesuré à l'aide d'un détecteur de fuite à l'hélium (ASM 142 d'Adixen) selon les conditions A4 de la norme MIL-STD-883 d'avril 2016.

Dans encore un autre mode de réalisation avantageux, le au moins un contact du connecteur circulaire hermétique selon l'invention est un contact mâle ou femelle, en particulier un contact femelle.

Dans un autre mode de réalisation avantageux, le au moins un contact du connecteur selon l'invention présente une taille d'engagement de contact 23, 22, 20, 16, 12 ou 8 selon la norme Mil-C-39029 de mai 1988, en particulier une taille d'engagement de contact 20 ou 16 selon la norme Mil-C-39029 de mai 1988, plus particulièrement un diamètre d'engagement de contact mesuré selon la norme Mil-C-39029 de mai 1988 compris entre 0,5 et 4 mm, plus particulièrement entre 0,6 et 3,7mm.

Dans encore un autre mode de réalisation avantageux, le connecteur selon l'invention comprend entre 2 et 187 contacts, avantageusement entre 7 et 39 contacts, lesdits contacts pouvant être des contacts mâles ou femelles, lesdits contacts pouvant avoir la même taille d'engagement de contact (par exemple 7 contacts mâles de taille d'engagement de contact 20 selon la norme Mil-C-39029 de mai 1988, 7 contacts femelles de taille d'engagement de contact 20 selon la norme Mil-C-39029 de mai 1988 ou 16 contacts mâles de taille d'engagement de contact 16 selon la norme Mil-C-39029 de mai 1988), ou avoir une taille d'engagement de contact différente (hybrides : par exemple 37 contacts mâles de taille d'engagement de contact 20 et 2 contacts mâles de taille d'engagement de contact 16 selon la norme Mil-C-39029 de mai 1988).

Les connecteurs selon l'invention peuvent avoir leurs boîtiers en 2 options de finition, soit avec les traitements de surface conventionnels (sous-couche nickel puis revêtement or) pour le montage sur module électronique par brasage tendre, soit sans traitement de surface pour le montage par soudage Laser.

La présente invention concerne enfin un procédé de fabrication d'un connecteur circulaire hermétique selon la présente invention, ledit procédé comprenant les étapes successives suivantes
- a) fourniture d'un connecteur circulaire non hermétique comprenant au moins un contact en cuivre ou en alliage de cuivre, éventuellement nickelé ou nickelé-doré, situé dans un boîtier en métal ou alliage, ledit métal ou alliage ayant un coefficient de dilatation thermique supérieur à 16ppm/°C, et pouvant avoir subi un traitement de surface ;
- b) fourniture d'un matériau de scellement en verre à base d'oxyde de tellure tel que décrit ou défini ci-dessus;
- c) chauffage du matériau de scellement en verre jusqu'à sa fluidification,
- d) remplissage du volume entre le boîtier et le au moins un contact du connecteur circulaire de l'étape a) à l'aide du matériau de scellement en verre chauffé obtenu à l'étape c)
- e) refroidissement, avantageusement jusqu'à la température ambiante, du connecteur circulaire obtenu à l'étape d) de façon à réaliser le scellement verre-métal;
- f) récupération du connecteur circulaire hermétique obtenu à l'étape e).

Dans un mode de réalisation avantageux, la température de l'étape c) est comprise entre 450°C et 750°C, avantageusement entre 480°C et 550°C.

Dans un autre mode de réalisation avantageux, le temps de scellement dure entre 2 et 10 s, avantageusement entre 2 et 5s.

L'invention sera mieux comprise à la lumière des exemples et des figures qui suivent qui sont donnés à titre indicatif non limitatif.

Brève description des dessins
La figure 1 représente un connecteur circulaire 38999 série III/B/99 contacts mâles.
La figure 2 représente un connecteur circulaire 38999 série I/B/99 contacts femelles.
La figure 3 représente un connecteur circulaire 26482 série I/20/16 contacts mâles.
La figure 4 représente un connecteur circulaire 26482 série I/20/39 contacts mâles hybrides.

### EXEMPLES

Dans ces exemples le référencement d'un connecteur circulaire est défini par : norme/taille connecteur/type d'arrangement. A titre d'exemple : 38999III/B/99 où 38999III désigne la norme Mil-DTL-38999 de février 2015 et la série III de connecteurs, B la taille d'engagement de contact du connecteur et 99 le type d'arrangement.

### Exemple 1 : Connecteur 38999III/B/99 (verre 1 : TZT-Ce)

On réalise un connecteur (Figure 1) constitué de :
- 7 contacts mâles de taille d'engagement de contact 20 en alliage CuBe (C17300) revêtus d'une sous-couche de nickel d'épaisseur de 1,27 µm minimum et une couche d'or d'épaisseur 1,27 µm minimum.
- 1 insert isolant en verre d'une composition nominale en pourcentage molaire (TeO₂-65%, ZnO-27%, TiO₂-5%, CeO₂-3%).
- 1 boîtier circulaire en alliage d'aluminium 5083.

L'arrangement et les dimensions du connecteur sont conformes aux normes Mil-DTL-38999 de février 2015 et Mil-STD-1560 de février 2015.

L'assemblage du connecteur est obtenu par une opération de scellement verre-métal à 480°C pendant 5 secondes. Le connecteur obtenu présente un niveau d'herméticité exprimé en taux de fuite à l'hélium inférieur à 10⁻¹¹ mbar.l/s suivant la méthode de mesure définie par la norme Mil-STD-883 d'avril 2016.

Le connecteur conserve le même niveau d'herméticité après un test dit de chocs thermiques défini dans la norme Mil-DTL-38999 de février 2015 qui consiste à faire subir au connecteur 10 cycles de passage de l'eau froide à 4°C à l'eau chaude à 90°C en moins de 5 secondes pour chaque passage.

Le connecteur répond aux autres exigences techniques spécifiées dans la norme Mil-DTL-38999 de février 2015 telles que les propriétés électriques, mécaniques, visuelles, thermiques etc...

### Exemple 2 : Connecteur 38999III/B/99 (verre 2 : TZT-Sb)

On réalise un connecteur dans les mêmes conditions que dans l'exemple 1 mais en utilisant un insert isolant d'une composition nominale en pourcentage molaire (TeO₂-65%, ZnO-25%, TiO₂-5%, Sb₂O₃-5%).

Le connecteur obtenu présente un niveau d'herméticité inférieur à 10⁻¹¹ mbar.l/s et conserve la même herméticité après le même test de chocs thermiques, tout en étant conforme à la norme Mil-DTL-38999 de février 2015.

### Exemple 3 : Connecteur 38999III/B/99 (verre 3 : TZT-Y)

On réalise un connecteur dans les mêmes conditions que dans l'exemple 1 mais en utilisant un insert isolant d'une composition nominale en pourcentage molaire (TeO₂-65%, ZnO-29%, TiO₂-5%, Y₂O₃-1%).

Le connecteur obtenu présente un niveau d'herméticité inférieur à 10⁻¹¹ mbar.l/s et conserve la même herméticité après le même test de chocs thermiques, tout en étant conforme à la norme Mil-DTL-38999 de février 2015.

### Exemple 4 : Connecteur38999III/B/99 (verre 4 : TZT-La)

On réalise un connecteur dans les mêmes conditions que dans l'exemple 1 mais en utilisant un insert isolant d'une composition nominale en pourcentage molaire (TeO₂-65%, ZnO-27%, TiO₂-5%, La₂O₃-3%).

Le connecteur obtenu présente un niveau d'herméticité inférieur à 10⁻¹¹ mbar.l/s et conserve la même herméticité après le même test de chocs thermiques, tout en étant conforme à la norme Mil-DTL-38999 de février 2015.

### Exemple 5 : Connecteur38999 série III /B/99 (verre 5 : TZT-B)

On réalise un connecteur dans les mêmes conditions que dans l'exemple 1 mais en utilisant un insert isolant d'une composition nominale en pourcentage molaire (TeO₂-65%, ZnO-27%, TiO₂-5%, B₂O₃-3%).

Le connecteur obtenu présente un niveau d'herméticité inférieur à 10⁻¹¹ mbar.l/s et conserve la même herméticité après le même test de chocs thermiques, tout en étant conforme à la norme Mil-DTL-38999 de février 2015.

### Exemple 6 : Connecteur 38999III/B/99 (verre 6 : TZT)

On réalise un connecteur dans les mêmes conditions que dans l'exemple 1 mais en utilisant un insert isolant d'une composition nominale en pourcentage molaire (TeO₂-65%, ZnO-30%, TiO₂-5%).

Le connecteur obtenu présente un niveau d'herméticité inférieur à 10⁻¹¹ mbar.l/s et conserve la même herméticité après le même test de chocs thermiques, tout en étant conforme à la norme Mil-DTL-38999 de février 2015.

### Exemple 7 : Connecteur 38999III/B/99 (aluminium 6061)

On réalise un connecteur dans les mêmes conditions que dans l'exemple 1 mais en utilisant un boîtier en alliage d'aluminium 6061.

Le connecteur obtenu présente un niveau d'herméticité inférieur à 10⁻¹¹ mbar.l/s et conserve la même herméticité après le même test de chocs thermiques, tout en étant conforme à la norme Mil-DTL-38999 de février 2015.

### Exemple 8 : Connecteur 38999III/B/99 (aluminium 4047)

On réalise un connecteur dans les mêmes conditions que dans l'exemple 1 mais en utilisant un boîtier en alliage d'aluminium 4047.

Le connecteur obtenu présente un niveau d'herméticité inférieur à 10⁻¹¹ mbar.l/s et conserve la même herméticité après le même test de chocs thermiques, tout en étant conforme à la norme Mil-DTL-38999 de février 2015.

### Exemple 9 : Connecteur 38999I/B/99 (contact femelle)

On réalise un connecteur dans les mêmes conditions que dans l'exemple 1, mais le connecteur contient 7 contacts femelles comportant une structure de rétention pour l'accouplement mâle/femelle (Figure 2).

Le connecteur obtenu présente un niveau d'herméticité inférieur à 10⁻¹¹ mbar.l/s et conserve la même herméticité après le même test de chocs thermiques, tout en étant conforme à la norme Mil-DTL-38999 de février 2015, notamment au niveau de l'accouplement avec contacts mâles.

### Exemple 10 : Connecteur 38999III/B/99 (500°C - 3 secondes)

On réalise un connecteur dans les mêmes conditions que dans l'exemple 1 mais l'opération de scellement s'effectue à 500°C en 3 secondes.

Le connecteur obtenu présente un niveau d'herméticité inférieur à 10⁻¹¹ mbar.l/s et conserve la même herméticité après le même test de chocs thermiques, tout en étant conforme à la norme Mil-DTL-38999 de février 2015.

### Exemple 11: Connecteur38999III/B/99 (550°C- 2 secondes)

On réalise un connecteur dans les mêmes conditions que dans l'exemple 1 mais l'opération de scellement s'effectue à 550°C en 2 secondes.

Le connecteur obtenu présente un niveau d'herméticité inférieur à 10⁻¹¹ mbar.l/s et conserve la même herméticité après le même test de chocs thermiques, tout en étant conforme à la norme Mil-DTL-38999 de février 2015.

### Exemple 12 : Connecteur type 264821/20/16

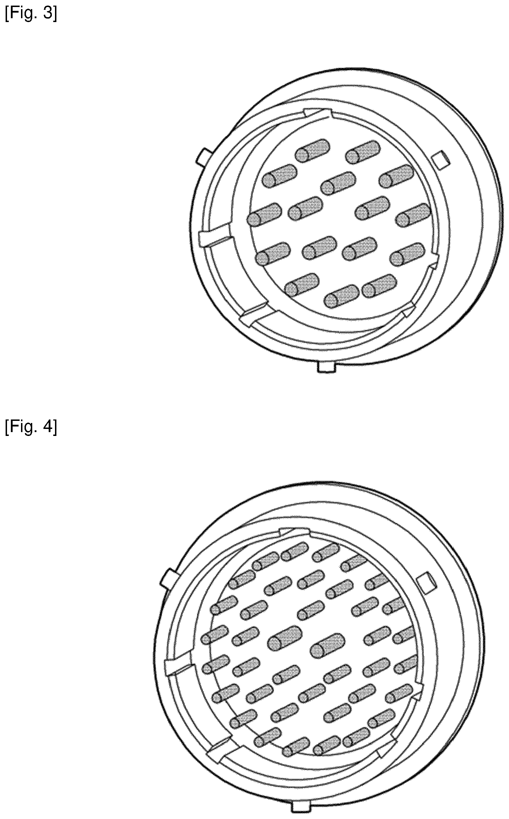

On réalise un connecteur (Figure 3) constitué de :
- 16 contacts mâles de taille d'engagement de contact 16 en alliage CuBe (C17300) revêtus d'une sous-couche de nickel d'épaisseur de 1,27 µm minimum et une couche d'or d'épaisseur 1,27 µm minimum.
- 1 insert isolant en verre d'une composition nominale en pourcentage molaire (TeO₂-65%, ZnO-27%, TiO₂-5%, CeO₂-3%).
- 1 boîtier circulaire en alliage d'aluminium 5083.

L'arrangement et les dimensions sont conformes aux normes Mil-DTL-26482 de février 2017 et Mil-STD-1669 d'octobre 2016.

L'assemblage du connecteur est obtenu par une opération de scellement verre-métal à 480°C pendant 5 secondes. Le connecteur obtenu présente un niveau d'herméticité inférieur à 10⁻¹¹ mbar.l/s.

Le connecteur conserve le même niveau d'herméticité après le test dit de chocs thermiques défini dans la norme Mil-DTL-26482 de février 2017 pour les connecteurs série I qui consiste à faire subir au connecteur 5 cycles de passage d'une atmosphère froide à -55°C à une atmosphère chaude à 125°C en moins de 5 secondes.

Le connecteur répond à toutes les autres exigences techniques spécifiées dans la norme Mil-DTL-26482 de février 2017 telles que les propriétés électriques, mécaniques, visuelles, thermiques etc...

### Exemple 13: Connecteur type 264821/20/39 (contacts hybrides)

On réalise un connecteur dans les mêmes conditions que dans l'exemple 12, mais le connecteur (Figure 4) contient 39 contacts de tailles d'engagement de contact différentes, plus précisément, 37 contacts de taille d'engagement de contact 20 et 2 contacts de taille d'engagement de contact 16.

L'arrangement et les dimensions sont conformes aux normes Mil-DTL-26482 de février 2017 et Mil-STD-1669 d'octobre 2016.

Le connecteur obtenu présente un niveau d'herméticité inférieur à 10⁻¹¹ mbar.l/s et conserve la même herméticité après le même test de chocs thermiques, tout en étant conforme à la norme Mil-DTL-26482 de février 2017.

### Exemple 14 : Connecteur type 2648211/20/16

On réalise un connecteur dans les mêmes conditions que dans l'exemple 12, mais les conditions du test de chocs thermique sont modifiées. En fait pour les connecteurs type 26482 série II, le test consiste à faire subir aux connecteurs 5 cycles de passage d'une atmosphère froide à -55°C à une atmosphère chaude à 175°C en moins de 5 secondes.

Le connecteur obtenu présente un niveau d'herméticité inférieur à 10⁻¹¹ mbar.l/s et conserve la même herméticité après le test de chocs thermiques défini, tout en étant conforme à la norme Mil-DTL-26482 de février 2017.

## Revendications

1. Connecteur circulaire hermétique comprenant au moins un contact dans un boitier et un matériau de scellement verre-métal entre le au moins un contact et le boîtier **caractérisé en ce que**
- le au moins un contact est en cuivre ou en alliage de cuivre, éventuellement nickelé ou nickelé-doré,
- le boîtier est en métal ou alliage, ledit métal ou alliage ayant un coefficient de dilatation thermique supérieur à 16ppm/°C, ledit métal ou alliage pouvant avoir subi un traitement de surface,
- le matériau de scellement est un verre à base d'oxyde de tellure ayant la composition constituée par, en pourcentage molaire :
- de 50 à 80 % deTeO₂, avantageusement de 60 à 70 % ;
- de 8 à 40 % de ZnO, avantageusement de 15 à 35 % ;
- de 2 à 25% de TiO₂, avantageusement de 3 à 10 %
- de 0 à 20 % d'un oxyde αₓO_{y}, avantageusement de 1 à 6 %, α étant un élément choisi dans le groupe constitué par Ba, Ce, Er, Sb, Y, La et B, x étant un nombre entier égal à 1 ou 2 et y un nombre entier égal à 1, 2 ou 3;
- éventuellement du ZnF₂ en une teneur de 2 à 10%, avantageusement de 3 à 8 %
- et les impuretés inévitables,
à la condition que ZnF₂ soit présent lorsque αₓO_{y} est BaO,
ladite composition étant essentiellement exempte d'oxyde de plomb, d'oxyde de sodium, d'oxyde de potassium et d'oxyde de vanadium
**caractérisé en ce que** le connecteur circulaire présente un taux de fuite à l'hélium inférieur ou égal à 10⁻¹¹ mbar.l/s.

2. Connecteur circulaire hermétique selon la revendication 1, **caractérisé en ce que** la composition du verre à base d'oxyde de tellure comprend de l'oxyde αₓO_{y} choisi dans le groupe constitué par Y₂O₃, CeO₂, Sb₂O₃, Er₂O₃, La₂O₃, B₂O₃ et BaO, en particulier dans le groupe constitué par CeO₂, Sb₂O₃, La₂O₃, Y₂O₃ et B₂O₃, plus particulièrement il s'agit de CeO₂.

3. Connecteur circulaire hermétique selon la revendication 1, **caractérisé en ce que** la composition du verre à base d'oxyde de tellure est exempte d'oxyde αₓO_{y}.

4. Connecteur circulaire hermétique selon l'une quelconque des revendications 1 à 3, **caractérisé en ce que** le coefficient de dilatation thermique de la composition du verre à base d'oxyde de tellure est compris entre 11 et 22 ppm/°C, avantageusement entre 12 et 16 ppm/°C.

5. Connecteur circulaire hermétique selon l'une quelconque des revendications 1 à 4, **caractérisé en ce que** l'alliage ou métal ayant un coefficient de dilatation thermique supérieur à 16ppm/°C est choisi dans le groupe constitué par l'aluminium, les alliages de l'aluminium et l'inox, avantageusement il s'agit d'un alliage d'aluminium choisi dans le groupe constitué par un alliage aluminium silicium et un alliage aluminium magnésium.

6. Connecteur circulaire hermétique selon l'une quelconque des revendications 1 à 5, **caractérisé en ce que** le au moins un contact est en cuivre ou alliage de cuivre, avantageusement en alliage cuivre-béryllium, éventuellement nickelé ou nickelé-doré, encore plus avantageusement en alliage cuivre-béryllium nickelé-doré.

7. Connecteur circulaire hermétique selon l'une quelconque des revendications 1 à 6, **caractérisé en ce que** le au moins un contact est un contact mâle ou femelle.

8. Connecteur circulaire hermétique selon l'une quelconque des revendications 1 à 7, **caractérisé en ce qu'**il comprend entre 2 et 187 contacts, avantageusement entre 7 et 39 contacts.

9. Procédé de fabrication d'un connecteur circulaire hermétique selon l'une quelconque des revendications 1 à 8, ledit procédé comprenant les étapes successives suivantes
- a) fourniture d'un connecteur circulaire non hermétique comprenant au moins un contact en cuivre ou en alliage de cuivre, éventuellement nickelé ou nickelé-doré, situé dans un boîtier en métal ou alliage, ledit métal ou alliage ayant un coefficient de dilatation thermique supérieur à 16ppm/°C, et pouvant avoir subi un traitement de surface ;
- b) fourniture d'un matériau de scellement en verre à base d'oxyde de tellure tel que défini dans l'une quelconque des revendications 1 à 4;
- c) chauffage du matériau de scellement en verre jusqu'à sa fluidification,
- d) remplissage du volume entre le boîtier et le au moins un contact du connecteur circulaire de l'étape a) à l'aide du matériau de scellement en verre chauffé obtenu à l'étape c)
- e) refroidissement du connecteur circulaire obtenu à l'étape d) de façon à réaliser le scellement verre-métal;
- f) récupération du connecteur circulaire hermétique obtenu à l'étape e).

10. Procédé selon la revendication 9, **caractérisé en ce que** la température de l'étape c) est comprise entre 450°C et 750°C, avantageusement entre 480°C et 550°C.

11. Procédé selon l'une quelconque des revendications 9 ou 10, **caractérisé en ce que** le temps de scellement dure entre 2 et 10 s, avantageusement entre 2 et 5s.

## Patentansprüche

1. Hermetischer Rundsteckverbinder, der mindestens einen Kontakt in einem Gehäuse und ein Glas-Metall-Abdichtmaterial zwischen dem mindestens einen Kontakt und dem Gehäuse umfasst, **dadurch gekennzeichnet, dass**
- der mindestens eine Kontakt aus Kupfer oder Kupferlegierung ist, optional vernickelt oder vernickelt-vergoldet,
- das Gehäuse aus Metall oder Legierung ist, wobei das Metall oder die Legierung einen Wärmeausdehnungskoeffizienten größer 16 ppm/°C aufweist, wobei das Metall oder die Legierung gegebenenfalls einer Oberflächenbehandlung unterzogen wurde,
- das Abdichtmaterial ein Glas auf Basis von Telluroxid ist, das die Zusammensetzung aufweist, die in Molprozent besteht aus:
- 50 bis 80 % TeO₂, vorteilhafterweise 60 bis 70 %,
- 8 bis 40 % ZnO, vorteilhafterweise 15 bis 35 %,
- 2 bis 25 % TiO₂, vorteilhafterweise 3 bis 10 %,
- 0 bis 20 % eines αₓO_{y}-Oxids, vorteilhafterweise 1 bis 6 %, wobei α ein Element ist, das aus der Gruppe ausgewählt ist, die aus Ba, Ce, Er, Sb, Y, La und B besteht, x eine ganze Zahl gleich 1 oder 2 ist und y eine ganze Zahl gleich 1, 2 oder 3 ist,
- optional ZnF₂ in einem Anteil von 2 bis 10 %, vorteilhafterweise 3 bis 8 %,
- und unvermeidbaren Unreinheiten,
unter der Voraussetzung, dass ZnF₂ vorhanden ist, wenn αₓO_{y} BaO ist,
wobei die Zusammensetzung im Wesentlichen frei von Bleioxid, Natriumoxid, Kaliumoxid und Vanadiumoxid ist,
**dadurch gekennzeichnet, dass** der Rundsteckverbinder eine Heliumleckrate kleiner oder gleich 10⁻¹¹ mbar.l/s aufweist.

2. Hermetischer Rundsteckverbinder nach Anspruch 1, **dadurch gekennzeichnet, dass** die Glaszusammensetzung auf Basis von Telluroxid αₓO_{y}-Oxid umfasst, das aus der Gruppe ausgewählt ist, die aus Y₂O₃, CeO₂, Sb₂O₃, Er₂O₃, La₂O₃, B₂O₃ und BaO besteht, im Speziellen aus der Gruppe, die aus CeO₂, Sb₂O₃, La₂O₃, Y₂O₃ und B₂O₃ besteht, wobei es sich spezieller um CeO₂ handelt.

3. Hermetischer Rundsteckverbinder nach Anspruch 1, **dadurch gekennzeichnet, dass** die Glaszusammensetzung auf Basis von Telluroxid frei von αₓO_{y}-Oxid ist.

4. Hermetischer Rundsteckverbinder nach einem der Ansprüche 1 bis 3, **dadurch gekennzeichnet, dass** der Wärmeausdehnungskoeffizient der Glaszusammensetzung auf Basis von Telluroxid zwischen 11 und 22 ppm/°C beträgt, vorteilhafterweise zwischen 12 und 16 ppm/°C.

5. Hermetischer Rundsteckverbinder nach einem der Ansprüche 1 bis 4, **dadurch gekennzeichnet, dass** die Legierung oder das Metall, die/das einen Wärmeausdehnungskoeffizienten größer 16 ppm/°C aufweist, aus der Gruppe ausgewählt ist, die aus Aluminium, Aluminium- und Edelstahllegierungen besteht, wobei es sich vorteilhafterweise um eine Aluminiumlegierung handelt, die aus der Gruppe ausgewählt ist, die aus einer Aluminium-Silizium-Legierung und einer Aluminium-Magnesium-Legierung besteht.

6. Hermetischer Rundsteckverbinder nach einem der Ansprüche 1 bis 5, **dadurch gekennzeichnet, dass** der mindestens eine Kontakt aus Kupfer oder Kupferlegierung ist, vorteilhafterweise aus Kupfer-Beryllium-Legierung, optional vernickelt oder vernickelt-vergoldet, noch bevorzugter aus vernickelt-vergoldeter Kupfer-Beryllium-Legierung.

7. Hermetischer Rundsteckverbinder nach einem der Ansprüche 1 bis 6, **dadurch gekennzeichnet, dass** der mindestens eine Kontakt ein Steck- oder Buchsenkontakt ist.

8. Hermetischer Rundsteckverbinder nach einem der Ansprüche 1 bis 7, **dadurch gekennzeichnet, dass** er zwischen 2 und 187 Kontakten umfasst, vorteilhafterweise zwischen 7 und 39 Kontakten.

9. Verfahren zur Fertigung eines hermetischen Rundsteckverbinders nach einem der Ansprüche 1 bis 8, wobei das Verfahren die folgenden aufeinanderfolgenden Schritte umfasst:
- a) Bereitstellen eines nichthermetischen Rundsteckverbinders, der mindestens einen Kontakt aus Kupfer oder Kupferlegierung umfasst, optional vernickelt oder vernickelt-vergoldet, der sich in einem Gehäuse aus Metall oder Legierung befindet, wobei das Metall oder die Legierung einen Wärmeausdehnungskoeffizienten größer 16 ppm/°C aufweist und gegebenenfalls einer Oberflächenbehandlung unterzogen wurde,
- b) Bereitstellen eines Abdichtmaterials aus Glas auf Basis von Telluroxid wie in einem der Ansprüche 1 bis 4 definiert,
- c) Erhitzen des Abdichtmaterials aus Glas bis zu seiner Verflüssigung,
- d) Füllen des Volumens zwischen dem Gehäuse und dem mindestens einen Kontakt des Rundsteckverbinders aus Schritt a) mit Hilfe des erhitzten Abdichtmaterials aus Glas, das in Schritt c) erhalten wird,
- e) Abkühlen des Rundsteckverbinders, der in Schritt d) erhalten wird, um die Glas-Metall-Abdichtung herzustellen,
- f) Gewinnen des hermetischen Rundsteckverbinders, der in Schritt e) erhalten wird.

10. Verfahren nach Anspruch 9, **dadurch gekennzeichnet, dass** die Temperatur von Schritt c) zwischen 450 °C und 750 °C beträgt, vorteilhafterweise zwischen 480 °C und 550 °C.

11. Verfahren nach einem der Ansprüche 9 oder 10, **dadurch gekennzeichnet, dass** die Zeit zum Abdichten zwischen 2 und 10 s dauert, vorteilhafterweise zwischen 2 und 5 s.

## Claims

1. Hermetic circular connector comprising at least one contact in an housing and a glass-metal sealing material between the at least one contact and the housing **characterized in that**
- the at least one contact is made of copper or copper alloy, optionally nickel-plated or nickel-gold-plated,
- the housing is made of metal or alloy, said metal or alloy having a coefficient of thermal expansion greater than 16 ppm/°C, said metal or alloy possibly having undergone a surface treatment,
- the glass-metal sealing material is a tellurium oxide-based glass having the composition consisting of, in mole percent:
- from 50 to 80% TeO₂, advantageously from 60 to 70%;
- from 8 to 40% ZnO, advantageously from 15 to 35%;
- from 2 to 25% TiO₂, advantageously from 3 to 10%.
- from 0 to 20% of an oxide αₓO_{y}, advantageously from 1 to 6%, α being an element selected from the group consisting of Ba, Ce, Er, Sb, Y, La and B, x being an integer equal to 1 or 2 and y being an integer equal to 1, 2 or 3;
- optionally ZnF₂ in a content of 2 to 10%, advantageously of 3 to 8%
- and unavoidable impurities,
provided that ZnF₂ is present when αₓO_{y} is BaO,
said composition being essentially free of lead oxide, sodium oxide, potassium oxide and vanadium oxide
**characterized in that** it has a helium leakage rate of equal or less than 10⁻¹¹ mbar.l/s.

2. Hermetic circular connector according to claim 1, **characterized in that** the tellurium oxide-based glass composition comprises the oxide αₓO_{y} selected from the group consisting of Y₂O₃, CeO₂, Sb₂O₃, Er₂O₃, La₂O₃, B₂O₃ and BaO, in particular selected from the group consisting of CeO₂, Sb₂O₃, La₂O₃, Y₂O₃ and B₂O₃, more particularly it is CeO₂.

3. Hermetic circular connector according to claim 1, **characterized in that** the tellurium oxide-based glass composition is free from the oxide αₓO_{y}.

4. Hermetic circular connector according to any one of claims 1 to 3, **characterized in that** the coefficient of thermal expansion of the tellurium oxide-based glass composition is between 11 and 22 ppm/°C, advantageously between 12 and 16 ppm/°C.

5. Hermetic circular connector according to any one of claims 1 to 4, **characterized in that** the alloy or metal having a coefficient of thermal expansion greater than 16 ppm/°C is selected from the group consisting of aluminum, aluminum alloys and stainless steel, advantageously it is an aluminum alloy selected from the group consisting of an aluminum silicon alloy and an aluminum magnesium alloy,.

6. Hermetic circular connector according to any one of claims 1 to 5, **characterized in that** the at least one contact is made of copper or copper alloy, advantageously of copper-beryllium alloy, optionally nickel-plated or nickel-gold-plated, more advantageously of nickel-gold-plated copper-beryllium alloy.

7. Hermetic circular connector according to any one of claims 1 to 6, **characterized in that** the at least one contact is a male contact or a female contact.

8. Hermetic circular connector according to any one of claims 1 to 7, **characterized in that** it comprises between 2 and 187 contacts, advantageously between 7 and 39 contacts.

9. A process for manufacturing a hermetic circular connector according to any one of claims 1 to 8, said process comprising the following successive steps
- a) providing a non-hermetic circular connector comprising at least one contact made of copper or copper alloy, optionally nickel-plated or nickel-gold-plated, located in an housing made of metal or alloy, said metal or alloy having a coefficient of thermal expansion greater than 16 ppm/°C, said metal or alloy possibly having undergone a surface treatment;
- b) providing a tellurium oxide-based glass sealing material as defined in any one of claims 1 to 4;
- c) heating the glass sealing material until its fluidizing,
- d) filling the volume between the housing and the at least one contact of the circular connector of step a) using the heated glass sealing material obtained in step c)
- e) cooling down the circular connector obtained in step d) in order to obtain the glass-metal sealing;
- f) recovering the hermetic circular connector obtained in step e).

10. The process according to claim 9, **characterized in that** the temperature of step c) is comprised between 450°C and 750°C, advantageously between 480°C and 550°C.

11. The process according to any of claim 9 or 10, **characterized in that** the sealing time lasts between 2 and 10 s, advantageously between 2 and 5s.
